# EUROPÄISCHE PATENTSCHRIFT

(11) **EP 3 677 469 B1**
(45) Veröffentlichungstag und Bekanntmachung des Hinweises auf die Patenterteilung: **28.12.2022**
(21) Anmeldenummer: 20150148.3
(22) Anmeldetag: 03.01.2020
(51) Int. Cl.: B60N 2/26, B60N 2/56

(54) **KINDERSITZ MIT EINEM LÜFTUNGSSYSTEM**
CHILD'S SEAT WITH A VENTILATION SYSTEM
SIÈGE ENFANT DOTÉ D'UN SYSTÈME D'AÉRATION

(30) Priorität: 04.01.2019 DE 102019100145
(43) Veröffentlichungstag der Anmeldung: 08.07.2020
(73) Patentinhaber: Osann GmbH, 78244 Gottmadingen (DE)
(72) Erfinder: SKLENARZ, Johannes, 5505 Mühlbach am Hochkönig (AT)
(74) Vertreter: Canzler & Bergmeier Patentanwälte Partnerschaft mbB

(56) Entgegenhaltungen:
- DE-A1-102009 036 488
- DE-A1-102012 013 606
- DE-U1- 8 911 586
- DE-U1-202009 017 050
- DE-U1-202013 102 443
- JP-A- H1 134 705
- US-A1- 2012 175 922

## Beschreibung

Die vorliegende Erfindung betrifft einen Kindersitz mit zumindest einem Sitzkörper, der eine Sitzfläche für ein Kind aufweist, mit einem Lüftungssystem zum Führen und/oder Ausbilden einer Luftströmung zur Regulierung einer Temperatur eines Kindes, und mit in zumindest einem Lüftungsbereich angeordneten Lüftungsöffnungen zum Heranführen der Luftströmung an das Kind und/oder Abführen der Luftströmung vom Kind. Die JP H1134705 weist einen Kindersitz aus einem Hohlkörper auf.

Aus der DE 195 27 352 C2 ist ein Kindersitz mit einem Lüftungssystem bekannt. Der Kindersitz besteht aus einem Formschaummaterial mit darin angeordneten Durchgangsöffnungen zur Belüftung des Kindes. Nachteilig an einem derartigen Kindersitz ist dessen aufwändige Fertigung.

Aufgabe der vorliegenden Erfindung ist es somit, den Nachteil des Stands der Technik zu beseitigen.

Die Aufgabe wird gelöst durch einen Kindersitz mit den Merkmalen des unabhängigen Patentanspruchs.

Vorgeschlagen wird ein Kindersitz mit zumindest einem Sitzkörper, der eine Sitzfläche für ein Kind aufweist. Die Sitzfläche ist beim bestimmungsgemäßen Gebrauch dem Kind zugewandt. Wenn das Kind im Kindersitz sitzt, ist die Sitzfläche dem Kind zugewandt. Der Kindersitz kann ferner ein Fahrzeugkindersitz sein, in dem Kleinkinder oder Kinder im Fahrzeug transportiert werden können.

Des Weiteren weist der Kindersitz ein Lüftungssystem zum Führen und/oder Ausbilden einer Luftströmung zur Regulierung einer Temperatur des Kindes auf. Beispielsweise kann mit Hilfe des Lüftungssystems das Kind gekühlt werden, was insbesondere bei heißen Sommertagen und in geschlossenen Fahrzeugen vorteilhaft ist, um eine Überhitzung des Kindes zu verhindern.

Zusätzlich oder alternativ kann mit Hilfe des Lüftungssystems das Kind auch erwärmt werden, so dass es vor Auskühlung geschützt wird, was natürlich vor allem im Winter eine Gefahr darstellt.

Ferner weist der Kindersitz in zumindest einem Lüftungsbereich Lüftungsöffnungen zum Heranführen der Luftströmung an das Kind auf. Zusätzlich oder alternativ kann mittels den in dem zumindest einen Lüftungsbereich angeordneten Lüftungsöffnungen auch die Luftströmung vom Kind abgeführt werden. Dadurch kann beispielsweise zum Kühlen des Kindes gekühlte Luft an das Kind herangeführt werden. Zum Erwärmen des Kindes kann auch erwärmte Luft an das Kind herangeführt werden.

Zum Kühlen des Kindes kann aber auch die Luft vom Kind abgeführt werden, so dass es gekühlt wird. Dabei wird die vom Kind selbst erwärmte Luft vom Kind abgeführt, so dass es gekühlt wird. Dadurch kann ferner Feuchtigkeit vom Kind abgeführt werden, welche beispielsweise durch Schwitzen des Kindes entsteht. Das Kind kann dadurch auch trocken gehalten werden, was dem Wohlbefinden und der Gesundheit des Kindes zu Gute kommt.

Erfindungsgemäß ist der zumindest eine Sitzkörper aus einem geschlossenen Hohlkörper ausgebildet. Dadurch kann der zumindest eine Sitzkörper und infolgedessen der Kindersitz einfach und kostengünstig hergestellt werden.

Die Lüftungsöffnungen sind in einer Wandung des Hohlkörpers angeordnet. Die Wandung begrenzt den Hohlkörper nach außen und sorgt für dessen Stabilität. Sind die Lüftungsöffnungen in der Wandung angeordnet, können diese bei der Herstellung des Hohlkörpers ausgebildet werden. Die Lüftungsöffnungen bilden somit einen Durchtritt für die Luftströmung durch die Wandung des Hohlkörpers. Durch die Lüftungsöffnungen kann die Luftströmung in den Hohlkörper eintreten und/oder aus dem Hohlkörper austreten.

Der Hohlkörper ist derart geschlossen, dass die Luftströmung zum Kind herangeführt und/oder abgeführt werden kann. Der Hohlkörper ist somit nicht vollständig geschlossen. Er ist vielmehr derart geschlossen, dass das Lüftungssystem das Kind kühlen und/oder heizen kann. Durch den Hohlkörper wird ferner die Luftströmung geführt. Der Hohlkörper kann in einer Anfangsphase des Herstellungsverfahrens vollständig geschlossen sein.

Vorteilhaft ist es, wenn der zumindest eine Sitzkörper ein Sitzteil mit einer ersten Sitzfläche aufweist. Zusätzlich oder alternativ ist es vorteilhaft, wenn der zumindest eine Sitzkörper ein Rückenteil mit einer zweiten Sitzfläche umfasst. Der Kindersitz kann somit eine Sitzschale sein. Im bestimmungsgemäßen Gebrauch sitzt das Kind somit mit dem Gesäß auf dem Sitzteil und das Rückenteil ist die Rückenlehne, so dass das Kind sich mit dem Rücken am Rückenteil anlehnt. Die erste Sitzfläche ist somit dem Gesäß zugewandt und/oder die zweite Sitzfläche ist dem Rücken des Kindes zugewandt.

Von Vorteil ist es zusätzlich oder alternativ, wenn der zumindest eine Lüftungsbereich mit den darin angeordneten Lüftungsöffnungen im Sitzteil und/oder im Rückenteil angeordnet ist. Ist der Lüftungsbereich im Rückenteil, beispielsweise in der zweiten Sitzfläche, angeordnet, kann der Rückenbereich des Kindes gekühlt werden. Dies hat den Vorteil, dass dadurch der Rumpf des Kindes und infolgedessen die Organe des Kindes gekühlt bzw. erwärmt werden. Zusätzlich oder alternativ können die Lüftungsöffnungen auch im Sitzteil, beispielsweise in der ersten Sitzfläche, angeordnet sein. Dadurch wird eher das Gesäß und die Oberschenkel des Kindes gekühlt bzw. erwärmt.

Vorteilhaft ist es, wenn der Lüftungsbereich in der, insbesondere ersten und/oder zweiten, Sitzfläche angeordnet ist. Dadurch kann die Kontaktfläche zum Kind gekühlt bzw. erwärmt werden.

Von Vorteil ist es, wenn das Lüftungssystem einen Lüfter aufweist, der den geschlossenen Hohlkörper mit einem Unterdruck beaufschlagen kann. Alternativ kann der Lüfter den Hohlkörper auch mit einem Überdruck beaufschlagen. Mit Hilfe des Lüfters kann die Luftströmung ausgebildet werden.

Vorteilhaft ist es, wenn ein erster geschlossener Hohlkörper des Sitzteils und ein zweiter geschlossener Hohlkörper des Rückenteils mittels eines Leitungssystems des Lüftungssystems miteinander verbunden sind. Das Leitungssystem verbindet dabei die beiden Hohlkörper des Sitzteils und des Rückenteils druck- und/oder luftdicht, d.h. mittels des Leitungssystems können das Sitzteil und das Rückenteil mit Unterdruck bzw. mit Überdruck des Lüfters beaufschlagt werden. Insbesondere kann auch die Luftströmung über das Leitungssystem zwischen Sitzteil und Rückenteil strömen. Mit Hilfe des Leitungssystems kann der Sitzteil und das Rückenteil zu einem gemeinsamen geschlossenen Hohlkörper verbunden werden.

Von Vorteil ist es, wenn der geschlossene Hohlkörper des zumindest einen Sitzkörpers mittels Extrusionsblasformens ausgebildet ist. Der geschlossene Hohlkörper kann somit mittels einem Kunststoff, beispielsweise einem Duroplast, ausgebildet sein. Mit Hilfe des Extrusionsblasformens kann der geschlossene Hohlkörper in einem Verfahrensschritt und/oder einteilig hergestellt werden. Außerdem ist er dadurch stabil und weist keine Schwachstellen, wie beispielsweise Schweißnähte, auf, so dass dieser mit dem Unterdruck bzw. Überdruck beaufschlagt werden kann. Dabei kann das Sitzteil und/oder das Rückenteil mittels Extrusionsblasformens ausgebildet sein.

Vorteilhaft ist es, wenn die Lüftungsöffnungen durch Abschneiden von beim Extrusionsblasformen entstandenen Fortsätzen ausgebildet sind. Derartige Fortsätze können auch gezielt, beispielsweise durch eine entsprechende Form einer Blasform beim Extrusionsblasformen, ausgebildet werden. Die Fortsätze weisen dabei die Gestalt von Erhebungen, Kegeln und/oder Pyramiden auf einer Außenseite des geschlossenen Hohlkörpers auf und sind selbst durch die Wandung des Hohlkörpers ausgebildet. Werden die Spitzen der Fortsätze abgeschnitten, bilden sich die Lüftungsöffnungen in der Wandung des Hohlkörpers.

Zusätzlich oder alternativ können zumindest ein Teil der Lüftungsöffnungen auch mittels Bohrungen ausgebildet sein.

Von Vorteil ist es, wenn der Kindersitz zumindest im Bereich der zumindest einen Sitzfläche mit einem luftdurchlässigen Textilnetzgewebe überzogen ist. Zusätzlich oder alternativ kann der Kindersitz zumindest im Bereich des zumindest einen Lüftungsbereichs mit dem luftdurchlässigen Textilnetzgewebe überzogen sein. Das Textilnetzgewebe kann als Abstandshalter dienen, so dass beispielsweise die Kleidung des Kindes oder die Haut des Kindes die Lüftungsöffnungen nicht verschließt und infolgedessen die Kühlung bzw. die Erwärmung des Kindes zum Erliegen kommt. Das Textilnetzgewebe kann ferner als Diffusor dienen, um die Luftströmung zu verwirbeln, so dass der Körper des Kindes großflächiger gekühlt bzw. beheizt wird.

Vorteilhafterweise kann das Textilnetzgewebe Strömungsöffnungen aufweisen, die zu den Lüftungsöffnungen des zumindest einen Sitzkörpers koaxial ausgerichtet sind. Die Strömungsöffnungen des Textilnetzgewebes sind somit Durchgänge für die Luftströmung. Sind die Lüftungsöffnungen und die Strömungsöffnungen koaxial zueinander ausgerichtet, kann die Luftströmung durch die Lüftungsöffnungen durch die Wandung des Hohlkörpers durchtreten und direkt durch die Strömungsöffnungen durch das Textilnetzgewebe durchtreten. Vorteilhaft ist es, wenn die Strömungsöffnungen und die dazugehörigen Lüftungsöffnungen den gleichen Querschnitt, die gleiche Querschnittsform und/oder die gleiche Größe aufweisen.

Von Vorteil ist es, wenn das Textilnetzgewebe mit einem Überzug überzogen ist. Der Sitzkörper ist mit dem Überzug überzogen. Der Überzug kann abnehmbar sein, so dass dieser gewaschen werden kann. Vorteilhafterweise ist der Überzug luftdurchlässig, so dass die Luftströmung durch den Überzug strömen kann. Hierbei kann der Überzug aus einem luftdurchlässigen Gewebe ausgebildet sein und/oder eine Vielzahl von Löchern aufweisen.

Vorteilhaft ist es, wenn der Kindersitz einen ersten Temperatursensor aufweist, mittels dem die Temperatur des Kindes gemessen werden kann. Dadurch kann ermittelt werden, ob das Kind überhitzt oder unterkühlt ist.

Zusätzlich oder alternativ ist es von Vorteil, wenn der Kindersitz einen zweiten Temperatursensor aufweist, mittels dem eine Umgebungstemperatur des Kindersitzes gemessen werden kann. Dadurch kann ermittelt werden, ob der Innenraum des Fahrzeugs überhitzt oder unterkühlt ist. Steht beispielsweise das Fahrzeug im Sommer in der Sonne, kann der Innenraum des Fahrzeugs schnell Temperaturen von über 50°C erreichen, was gesundheitsgefährdend für das Kind sein kann.

Von Vorteil ist es, wenn der Kindersitz eine Steuereinheit aufweist, die die gemessene Temperatur des ersten und/oder des zweiten Temperatursensors auswerten kann. Zusätzlich oder alternativ kann die Steuereinheit in Abhängigkeit der gemessenen Temperatur des ersten und/oder des zweiten Temperatursensors das Lüftungssystem steuern. Überschreitet beispielsweise die gemessene Temperatur des ersten Temperatursensors einen Grenzwert, beispielsweise 35°C oder 40°C, kann die Steuereinheit das Lüftungssystem bzw. den Lüfter des Lüftungssystems aktivieren, so dass das Kind gekühlt wird, um es vor Überhitzung zu schützen. Die Steuereinheit kann das Lüftungssystem auch wieder abschalten, wenn ein Grenzwert der Temperatur unterschritten wird.

Vorteilhaft ist es, wenn der Kindersitz eine Alarmeinheit aufweist, die mit der Steuereinheit verbunden ist. Überschreitet beispielsweise die gemessene Temperatur des Kindes den Grenzwert, kann ein Alarm ausgegeben werden, so dass Eltern oder andere Erwachsene darauf hingewiesen werden, dass eine Überhitzung droht. Der Alarm kann auch ausgegeben werden, wenn trotz längerer Kühlung des Kindes die Temperatur des Kindes, welche von dem ersten Temperatursensor erfasst werden kann, nicht unter den Grenzwert absinkt.

Von Vorteil ist es, wenn der Kindersitz eine Schnittstelle aufweist, über die zumindest die Messwerte des ersten und/oder zweiten Temperatursensors an ein mobiles Gerät und/oder eine Fahrzeugsteuerung übermittelt werden. Das mobile Gerät kann beispielsweise ein Smartphone mit einer geeigneten App sein, so dass die Temperatur des Kindes und/oder des Innenraums des Fahrzeugs überwacht werden kann. Die Überwachung der Temperatur des Kindes und/oder des Innenraums des Fahrzeugs kann aber auch über die Fahrzeugsteuerung erfolgen und kann dem Fahrer bzw. dem Beifahrer über einen Bordcomputer des Fahrzeugs angezeigt werden.

Die Schnittstelle kann beispielsweise eine kabellose Schnittstelle bzw. eine Funkschnittstelle, wie beispielsweise Bluetooth oder WLAN, sein. Alternativ kann die Schnittstelle auch kabelgebunden sein.

Zusätzlich oder alternativ kann über die Schnittstelle das Lüftungssystem vom mobilen Gerät und/oder von der Fahrzeugsteuerung gesteuert werden. Beispielsweise kann über das Smartphone das Lüftungssystem des Kindersitzes aktiviert werden, wenn die Temperatur des Kindes und/oder des Innenraums den Grenzwert überschritten hat oder den Grenzwert zu überschreiten droht.

Dabei kann mittels des mobilen Geräts und über die Schnittstelle auch die Alarmanlage des Fahrzeugs und/oder die Alarmeinheit des Kindersitzes aktiviert werden. Vergisst ein Elternteil das Kind im Fahrzeug, kann es den Alarm aktivieren, um Personen in der Umgebung auf das Kind im Fahrzeug aufmerksam zu machen.

Dabei kann die Steuereinheit die Schnittstelle aufweisen.

Von Vorteil ist es, wenn der Kindersitz eine Reguliereinheit zur manuellen Regulierung des Lüftungssystems aufweist. Mit Hilfe der Reguliereinheit kann das Kind, wenn es bereits ein bestimmtes Alter hat, selbstständig das Lüftungssystem steuern.

Vorteilhaft ist es, wenn der Kindersitz einen Erkennungssensor aufweist, mittels dem die Anwesenheit des Kindes im Kindersitz erkannt werden kann. Dadurch kann das Lüftungssystem abgeschaltet werden, wenn kein Kind im Kindersitz sitzt. Der Erkennungssensor kann beispielsweise ein Druck-, Kontakt- und/oder Annäherungssensor im Kindersitz sein.

Vorteilhaft ist es, wenn das Lüftungssystem des Kindersitzes mit einer Klimaanlage des Fahrzeugs verbindbar ist. Beispielsweise weist das Lüftungssystem einen Anschluss und/oder eine Verbindungsleitung auf, um von der Klimaanlage gekühlte Luft in das Lüftungssystem einzuleiten, so dass das Kind mit der gekühlten Luft gekühlt werden kann.

Mit Hilfe des Anschlusses und/oder einer Verbindungsleitung kann das Lüftungssystem des Kindersitzes auch mit einer Heizanlage des Fahrzeuges verbunden werden.

Das Lüftungssystem weist auch eine Heizeinheit auf, um die Luftströmung zu erwärmen, so dass das Kind beheizt werden kann.

Vorteilhaft ist es, wenn die Heizeinheit als Heizschicht ausgebildet ist. Zusätzlich oder alternativ kann die Heizeinheit auf dem zumindest einen Sitzkörper, also auf dem Sitzteil und/oder dem Rückenteil, angeordnet sein. Die Heizeinheit ist zwischen Sitzkörper und dem Überzug angeordnet. Dadurch kann erreicht werden, dass das Kind unmittelbar und, wenn die Heizeinheit als Heizschicht ausgebildet ist, flächig beheizt wird. Die Heizschicht kann auch zwischen zumindest zwei Textilnetzgeweben angeordnet sein.

Weitere Vorteile der Erfindung sind in den nachfolgenden Ausführungsbeispielen beschrieben. Es zeigen:
- **Figur 1**: eine schematische seitliche Schnittansicht eines Kindersitzes mit zumindest einem Sitzkörper,
- **Figur 2**: eine schematische Schnittansicht einer Sitzfläche mit einem Textilnetzgewebe und einem Überzug,
- **Figur 3**: eine schematische Schnittansicht einer Sitzfläche mit Heizeinheit und
- **Figur 4**: eine schematische Schnittansicht einer Sitzfläche mit Heizeinheit.

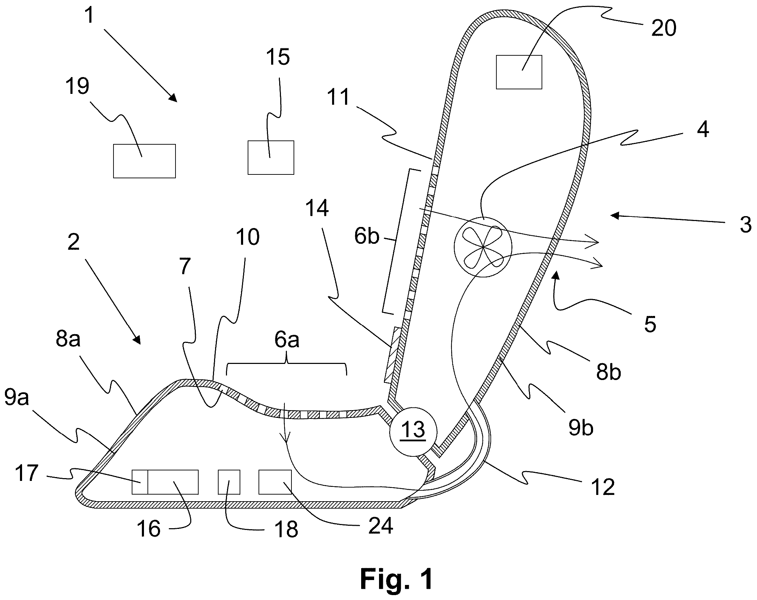

Figur 1 zeigt eine schematische seitliche Schnittansicht eines Kindersitzes 1 mit zumindest einem Sitzkörper 2, 3. Gemäß dem vorliegenden Ausführungsbeispiel weist der Kindersitz 1 zwei Sitzkörper 2, 3, auf. Die beiden Sitzkörper 2, 3 sind hier ein Sitzteil 2 und ein Rückenteil 3. Eine derartige Ausführung des Kindersitzes 1 mit Sitzteil 2 und Rückenteil 3 eignet sich im Wesentlichen für Kleinkinder, beispielsweise zwischen 0 und 3 Jahren. Für größere Kinder, beispielsweise zwischen 4 und 8 Jahren, reicht ein Kindersitz 1 aus, der lediglich das Sitzteil 2 aufweist. Ein Kind ist hier nicht gezeigt.

Der Kindersitz 1 kann beispielsweise in einem hier nicht gezeigten Fahrzeug angeordnet sein. Der Kindersitz 1 weist dazu Mittel auf, um im Fahrzeug befestigt zu werden.

Für Kinder im Kindersitz 1 droht gerade im Sommer und bei hoher Sonneneinstrahlung im Fahrzeug die Gefahr, dass sie überhitzen. Beispielsweise kann die Temperatur im Fahrzeug im Sommer leicht über 50°C erreichen, was eine Gefahr für die Gesundheit des Kindes darstellt.

Der Kindersitz 1 weist ein Lüftungssystem zum Führen und/oder Ausbilden einer Luftströmung 5 zur Regulierung der Temperatur des Kindes. Im vorliegenden Ausführungsbeispiel umfasst das Lüftungssystem einen Lüfter 4, um die Luftströmung 5 auszubilden. Der Lüfter 4 ist beispielsweise in einem seitlichen Bereich des Kindersitzes 1 angeordnet. Vorzugsweise ist dieser in einer Vertiefung der Außenkontur des Hohlkörpers 8 angeordnet. Hier kann sichergestellt werden, dass der Lüfter 4 vom Autositz beabstandet ist und eine gute Luftab- und/oder Luftzufuhr ermöglicht wird.

Ferner führt die Luftströmung 5 im vorliegenden Ausführungsbeispiel vom Kind weg, so dass das Lüftungssystem ein Entlüftungssystem ist.

In zumindest einem Lüftungsbereich 6 des Kindersitzes 1 sind Lüftungsöffnungen 7 angeordnet, wobei der Einfachheit halber lediglich eine einzige Lüftungsöffnung 7 mit einem Bezugszeichen versehen ist. Mit Hilfe der Lüftungsöffnungen 7 kann die Luftströmung 5 an das Kind herangeführt und/oder, wie hier gezeigt ist, vom Kind abgeführt werden.

Des Weiteren ist der zumindest eine Sitzkörper 2, 3 aus einem geschlossenen Hohlkörper 8 ausgebildet. Der Hohlkörper 8 ist dabei derart geschlossen, dass die Luftströmung 5 vom Kind weg und/oder zum Kind hingeführt werden kann. Mittels des Hohlkörpers 8 können die Sitzkörper 2, 3 und somit der Kindersitz 1 auf einfache Weise hergestellt werden. Der Hohlkörper 8 weist somit einen Hohlraum auf, der im Wesentlichen durch eine Wandung 9 begrenzt ist. Der Hohlkörper 8 ist vorzugsweise aus einem Kunststoff hergestellt und/oder einteilig.

Die Lüftungsöffnungen 7 sind in einer Wandung 9 des zumindest einen Hohlkörpers 8 angeordnet. Dadurch kann die Luftströmung 5 durch den zumindest einen Hohlkörper 8 an das Kind geführt und/oder vom Kind weggeführt werden.

Vorteilhaft ist es, wenn in der Wandung 9 auch der Lüfter 4 angeordnet ist, um die hier gezeigte Luftströmung 5 aus dem Hohlkörper 8 herauszuführen.

Wenn, wie hier gezeigt ist, die Luftströmung 5 vom Kind weggeführt wird, kann die warme Luft vom Kind abtransportiert werden, so dass das Kind gekühlt wird. Ein weiterer Vorteil dieser Entlüftung ist, dass durch Schwitzen des Kindes gebildete Feuchtigkeit ebenfalls abtransportiert wird. Das Wohlbefinden des Kindes wird dadurch verbessert.

Gemäß dem vorliegenden Ausführungsbeispiel weist der Kindersitz 1 zwei Lüftungsbereiche 6a, 6b auf. Ein erster Lüftungsbereich 6a ist im Sitzteil 2 und ein zweiter Lüftungsbereich 6b ist im Rückenteil 3 angeordnet. Mit Hilfe des ersten Lüftungsbereichs 6a kann insbesondere ein Gesäß des Kindes gekühlt und/oder erwärmt werden. Mit Hilfe des zweiten Lüftungsbereichs 6b im Rückenteil 3 kann insbesondere der Rumpf des Kindes gekühlt und/oder erwärmt werden. Es ist natürlich auch ein Kindersitz 1 vorstellbar, der lediglich einen der beiden hier gezeigten Lüftungsbereiche 6a, 6b aufweist.

Gemäß dem vorliegenden Ausführungsbeispiel ist der erste Lüftungsbereich 6a in einer ersten Sitzfläche 10 des Sitzteils 2 angeordnet. Zusätzlich oder alternativ ist der zweite Lüftungsbereich 6b in einer zweiten Sitzfläche 11 des Rückenteils 3 angeordnet. Das Kind kommt bei bestimmungsgemäßem Gebrauch des Kindersitzes 1 mit den beiden Sitzflächen 10, 11 in Kontakt, so dass direkt eine Kontaktfläche zwischen Kind und Kindersitz 1 gekühlt bzw. beheizt werden kann.

Der Lüfter 4 des Lüftungssystems wird gemäß dem vorliegenden Ausführungsbeispiel derart betrieben, dass dieser die Hohlkörper 8 mit einem Unterdruck beaufschlagen kann, so dass sich die hier gezeigte Luftströmung 5 ausbilden kann.

Die beiden in diesem Ausführungsbeispiel gezeigten Hohlkörper 8a, 8b sind ferner mit einem Leitungssystem 12 miteinander verbunden. Insbesondere verbindet das Leitungssystem 12 die beiden Hohlkörper 8a, 8b luft- und/oder druckdicht miteinander, so dass die Luftströmung 5 über das Leitungssystem 12 zwischen den beiden Hohlkörpern 8a, 8b strömen kann. Dies hat den Vorteil, dass lediglich ein Lüfter 4 ausreicht, um die Luftströmung 5 an beide Lüftungsbereiche 6a, 6b heranzuführen und/oder von diesen beiden abzuführen.

Außerdem kann der Kindersitz 1, wie hier gezeigt ist, zumindest einen Temperatursensor 14, 15 aufweisen. Gemäß dem vorliegenden Ausführungsbeispiel ist ein erster Temperatursensor 14 derart angeordnet, dass dieser die Temperatur des Kindes messen kann. Vorteilhafterweise ist der erste Temperatursensor 14 beispielsweise an der zweiten Sitzfläche 11 des Rückenteils 3 angeordnet, so dass der erste Temperatursensor 14 mit dem Kind in Kontakt kommt.

Gemäß dem vorliegenden Ausführungsbeispiel weist der Kindersitz 1 einen zweiten, hier schematisch dargestellten, Temperatursensor 15 auf, mittels dem die Umgebungstemperatur des Kindersitzes 1 ermittelt werden kann. Der zweite Temperatursensor 15 kann beispielsweise an einer Außen-, Rückseite und/oder einer Seite des Kindersitzes 1 angeordnet sein.

Des Weiteren weist der Kindersitz 1 des vorliegenden Ausführungsbeispiels eine Steuereinheit 16 auf, die die Messwerte des ersten und/oder zweiten Temperatursensors 14, 15 erhalten und/oder auswerten kann. Die Steuereinheit 16 kann ferner das Lüftungssystem steuern, so dass bei einer erkannten Überhitzung, d.h. wenn der Messwert eines Temperatursensors 14, 15 über einem Grenzwert liegt, das Kind gekühlt wird. Die Steuereinheit 16 kann beispielsweise den Lüfter 4 ansteuern, so dass dieser den zumindest einen Hohlkörper 8 mit einem Unterdruck beaufschlagt, so dass die warme Luft vom Kind durch die Lüftungsöffnungen 7 abgeführt wird.

Der Kindersitz 1 kann ferner eine Schnittstelle 17 aufweisen, die gemäß dem vorliegenden Ausführungsbeispiel an der Steuereinheit 16 angeordnet ist bzw. Teil der Steuereinheit 16 ist. Mittels der Schnittstelle 17 können die Messwerte des zumindest einen Temperatursensors 14, 15 an ein mobiles Gerät 19 übermittelt werden. Bei dem mobilen Gerät 19 kann es sich beispielsweise um ein Smartphone handeln, auf welchem eine entsprechende App installiert ist, um die Temperatur des Kindes und/oder der Umgebung des Kindersitzes 1 zu überwachen und um bei Bedarf einen Alarm am mobilen Gerät 19 auszugeben.

Vom mobile Gerät 19 aus kann auch über die Schnittstelle 17 das Lüftungssystem gesteuert werden, so dass beispielsweise ein Elternteil das Lüftungssystem des Kindersitzes 1 aktivieren kann, wenn eine Überhitzung des Kindes erkannt wurde oder droht. Anstelle oder zusätzlich zum mobilen Gerät 19 können die Messwerte der Temperatursensoren 14, 15 auch an eine hier nicht gezeigte Fahrzeugsteuerung übermittelt werden. Zusätzlich oder alternativ kann auch von der Fahrzeugsteuerung aus der Kindersitz 1 gesteuert werden.

Ebenso kann der Kindersitz 1 gemäß dem vorliegenden Ausführungsbeispiel eine Reguliereinheit 18 umfassen, so dass ein Kind, welches alt genug ist, das Lüftungssystem selbstständig steuern kann.

Des Weiteren kann der Kindersitz 1 eine Alarmeinheit 20 aufweisen, mittels welcher ein Alarm ausgegeben werden kann. Beispielsweise kann bei Überschreiten eines Grenzwertes eines Messwertes zumindest eines Temperatursensors 14, 15 der Alarm ausgegeben werden. Der Alarm kann dabei akustisch und/oder optisch sein, um auf die Überhitzung bzw. die drohende Überhitzung des Kindes hinzuweisen.

Vorteilhaft ist es auch, wenn der Kindersitz 1 eine Heizeinheit 24 aufweist, um zumindest die Luftströmung 5 zu erwärmen. Dadurch kann erwärmte Luft an das Kind herangeführt werden, um eine Unterkühlung des Kindes zu verhindern. Die Luftströmung 5 strömt dabei natürlich in die zu der hier entgegengesetzten Richtung.

Die Heizeinheit 24 kann zusätzlich oder alternativ auch derart im Kindersitz 1 angeordnet sein, dass die erste und/oder die zweite Sitzfläche 10, 11 erwärmt werden kann. Die Heizeinheit 24 kann beispielsweise eine Heizwendel aufweisen.

Derr Kindersitz 1 weist vorteilhafterweise ein Gelenk 13 auf, mittels dem das Rückenteil 3 gegenüber dem Sitzteil 2 geschwenkt werden kann.

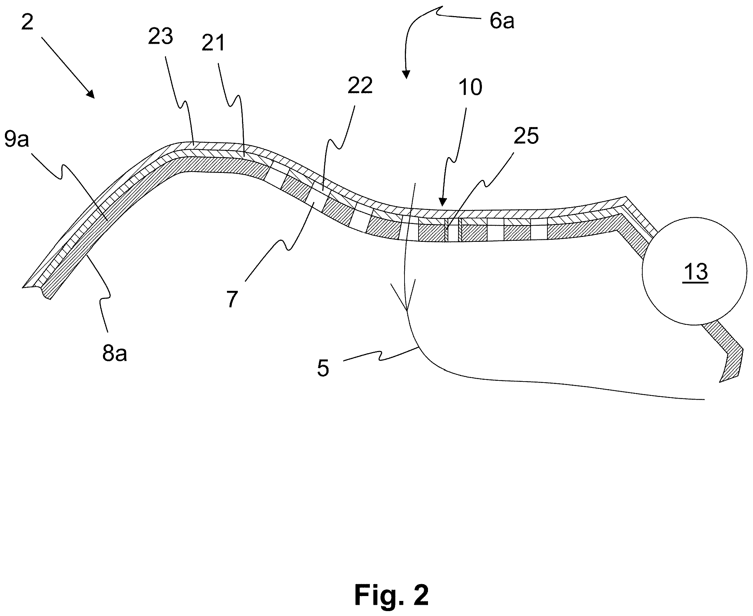

Figur 2 zeigt eine schematische Schnittansicht eines Ausschnitts des Sitzteils 2 auf die erste Sitzfläche 10 mit einem Textilnetzgewebe 21 und einem Überzug 23. Merkmale, die bereits in der vorangegangenen Figur beschrieben sind, werden der Einfachheit halber nicht nochmals erklärt, wenn sie die gleiche oder ähnliche Wirkung haben.

Figur 2 ist insbesondere ein Ausschnitt von Figur 1. Merkmale des Kindersitzes 1 können ferner auch erst in dieser und/oder in einer nachfolgenden Figur beschrieben und gezeigt sein.

Das Textilnetzgewebe 21 ist im vorliegenden Ausführungsbeispiel zumindest über der ersten Sitzfläche 10 angeordnet. Zusätzlich oder alternativ ist das Textilnetzgewebe 21 auch über dem hier gezeigten ersten Lüftungsbereich 6a angeordnet. Das Textilnetzgewebe 21 weist ferner Strömungsöffnungen 22 auf, die koaxial zu den Lüftungsöffnungen 7 angeordnet sind. Der Einfachheit halber ist lediglich eine Strömungsöffnung 22 mit einem Bezugszeichen versehen. Die Strömungsöffnungen 22 weisen ferner die gleiche Größe und den gleichen Querschnitt zu den Lüftungsöffnungen 7 auf, so dass die Luftströmung 5 mit geringem Widerstand durch die Strömungsöffnungen 22 und die Lüftungsöffnungen 7 strömen kann. Das Textilnetzgewebe 21 dient als Abstandshalter, so dass die Kleidung des Kindes, die Haut des Kindes und/oder der Überzug 23 nicht die Lüftungsöffnungen 7 bedecken und so die Luftströmung 5 behindern. Dadurch kann gut die erwärmte Luft vom Kind abgeführt und/oder frische Luft zum Kind geführt werden.

Das Textilnetzgewebe 21 ist ferner über der Wandung 9a des Hohlkörpers 8a angeordnet.

Der Kindersitz 1 weist im vorliegenden Ausführungsbeispiel einen Überzug 23 auf, der zumindest die Sitzfläche 10 und/oder den Lüftungsbereich 6a bedeckt. Der Überzug 23 kann vorteilhafterweise entfernt werden, um ihn zu waschen.

Das Textilnetzgewebe 21 und/oder der Überzug 23 können in gleicher Weise auch über dem Lüftungsbereich 6b und/oder der zweiten Sitzfläche 11 des Rückenteils 3 angeordnet sein.

Ferner kann in den Lüftungsöffnungen 7 und/oder in den Strömungsöffnungen 22 ein Einsatz 25 angeordnet sein, um die Lüftungsöffnungen 7 und/oder die Strömungsöffnungen 22 offen zu halten. Der Einfachheit halber ist lediglich ein Einsatz 25 gezeigt. Der Einsatz 25 kann ein Röhrchen sein, welches in die Lüftungsöffnungen 7 eingesetzt ist oder welches einteilig mit dem Hohlkörper 8 ausgebildet ist. Der Einsatz 25 ragt über die Außenseite des Hohlkörpers 8 hinaus, so dass der hinausragende Abschnitt des Einsatzes 25 in die Strömungsöffnungen 22 des Textilnetzgewebes 21 gesteckt werden kann. Die Strömungsöffnungen 22 werden über den hinausragenden Abschnitt des Einsatzes 25 gesteckt.

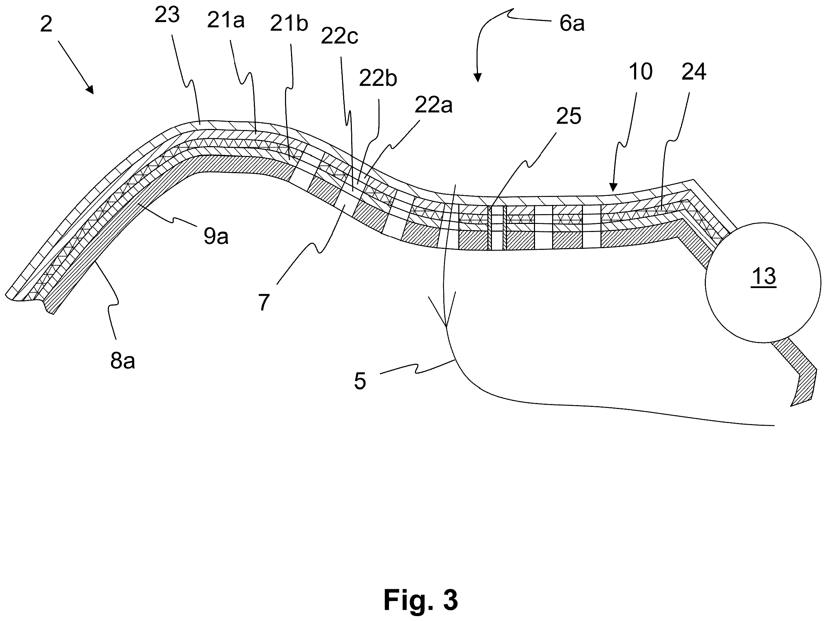

Figur 3 zeigt eine schematische Schnittansicht der Sitzfläche 10 bzw. des Sitzteils 2. Der Einfachheit halber werden Merkmale, welche bereits zu zumindest einer vorangegangenen Figur beschrieben sind, nicht nochmals erklärt. Außerdem werden für gleiche oder zumindest ähnlich wirkende Merkmale gleiche Bezugszeichen verwendet. Ferner können der Übersichtlichkeit halber in dieser und/oder in nachfolgenden Figuren nicht mehr alle Merkmale gezeigt sein.

Die Sitzfläche 10 bzw. das Sitzteil 2 weist hier ein erstes und/oder ein zweites Textilnetzgewebe 21a, 21b auf, welche vorzugsweise als Schicht ausgebildet sind. Zusätzlich weist das Sitzteil 2 die Heizeinheit 24 auf bzw. ist in der Sitzfläche 10 die Heizeinheit 24 angeordnet. Die Heizeinheit 24 kann, wie hier gezeigt ist, als Heizschicht ausgebildet sein. Damit kann eine flächige Beheizung der Sitzfläche 10 erreicht werden. Mit Hilfe der flächigen Beheizung der Sitzfläche 10 mittels der als Heizschicht ausgebildeten Heizeinheit 24 kann die Temperatur der Heizeinheit 24 vermindert werden, wobei das Kind trotzdem ausreichend beheizt wird. Die Gefahr von Verbrennungen oder ein Unwohlsein für das Kind wird somit verringert. Die ist ein Vorteil gegenüber einer punktuellen Beheizung.

Die als Heizeinheit 24 ausgebildete Heizschicht kann beispielsweise elektrisch betrieben werden und vorzugsweise mäanderförmige Heizleitungen aufweisen, die auf Widerstandsheizung basieren.

Die als Heizschicht ausgebildete Heizeinheit 24 ist im vorliegenden Ausführungsbeispiel zwischen einem ersten Textilnetzgewebe 21a und einem zweiten Textilnetzgewebe 21b angeordnet. Über dem ersten Textilnetzgewebe 21a ist wieder der Überzug 23 angeordnet. Der Überzug 23 ist abnehmbar, um diesen beispielsweise waschen zu können. Das zweite Textilnetzgewebe 21b ist auf der Wandung 9a des Sitzteils 2 angeordnet.

Alternativ kann die Heizeinheit 24 unmittelbar auf der Wandung 9a angeordnet sein. Darüber kann ein Textilnetzgewebe 21 und weiterhin darüber der Überzug 23 angeordnet sein.

Des Weiteren kann das erste Textilnetzgewebe 21a, das zweite Textilnetzgewebe 21b und/oder die Heizeinheit 24 Strömungsöffnungen 22 aufweisen, um die Luftströmung 5 durchführen bzw. leiten zu können. Gemäß dem vorliegenden Ausführungsbeispiel weisen das erste Textilnetzgewebe 21a eine erste Strömungsöffnung 22a, das zweite Textilnetzgewebe 21b eine dritte Strömungsöffnung 22c und die Heizeinheit 24 eine zweite Strömungsöffnung 22b auf. Die drei Strömungsöffnungen 22a - 22c sind koaxial zueinander angeordnet, um die Luftströmung 5 durch alle Strömungsöffnungen 22a - 22c leiten zu können. Ferner ist gemäß dem vorliegenden Ausführungsbeispiel die Lüftungsöffnung 7 auch koaxial zu den Strömungsöffnungen 22a - 22c. Wie hier gezeigt ist, weist das Sitzteil 2 natürlich mehrere voneinander beabstandete Strömungsöffnungen 22a - 22c und Lüftungsöffnungen 7 auf.

Insbesondere wenn die Heizeinheit 24 die Strömungsöffnung 22b aufweist, kann mittels der Heizeinheit 24 zum einen die gute Beheizung und zum anderen die gute Belüftung und/oder Entlüftung des Kindes erreicht werden.

Der Überzug 23 ist geschlossen, aber luftdurchlässig. Dadurch wird verhindert, dass Schmutz in den Hohlkörper gelangt.

Gemäß dem vorliegenden Ausführungsbeispiel erstreckt sich der Einsatz 25 durch das erste Textilnetzgewebe 21a, die Heizeinheit 24 und das zweite Textilnetzgewebe 21b.

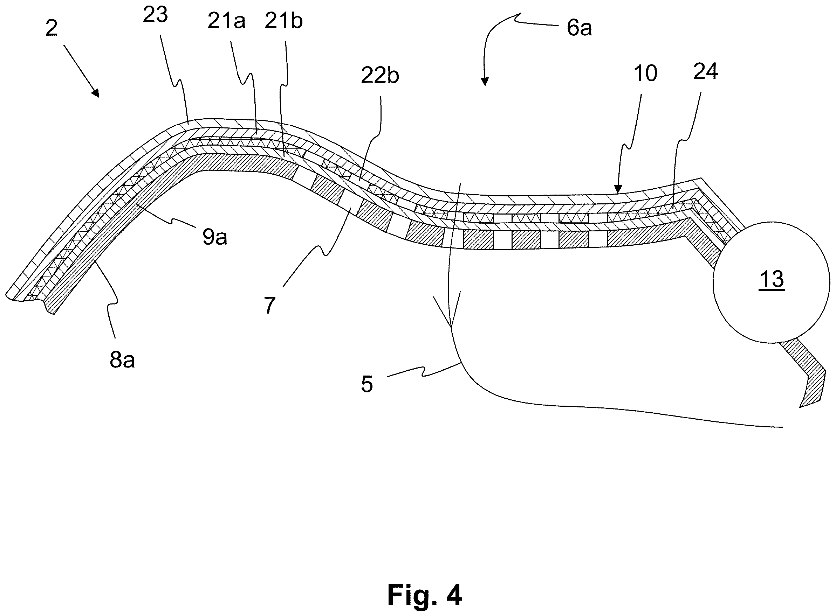

Figur 4 zeigt eine schematische Schnittansicht des Sitzteils 2. Der Einfachheit halber werden Merkmale, welche bereits zu zumindest einer vorangegangenen Figur beschrieben sind, nicht nochmals erklärt. Außerdem werden gleiche oder zumindest ähnlich wirkende Merkmale gleiche Bezugszeichen verwendet. Ferner können der Übersichtlichkeit halber in dieser und/oder in nachfolgenden Figuren nicht mehr alle Merkmale gezeigt sein.

Hier weist die Heizeinheit 24, welche beispielsweise als Heizschicht ausgebildet ist, die Strömungsöffnung 22b auf. Das erste und/oder zweite Textilnetzgewebe 21a, 21b sind hier geschlossen. Jedoch weist das zumindest eine Textilnetzgewebe 21a, 21b eine Durchlässigkeit für die Luftströmung 5 auf.

In einem alternativen, hier nicht dargestellten Ausführungsbeispiel kann auch lediglich das zumindest eine Textilnetzgewebe 21a, 21b die Strömungsöffnungen 22 aufweisen. Die Heizeinheit 24 kann dann eine geschlossene Fläche bilden, wobei die Heizeinheit 24 dann die Durchlässigkeit für die Luftströmung 5 aufweist.

In einem weiteren alternativen Ausführungsbeispiel kann das zumindest eine Textilnetzgewebe 21a, 21b und die Heizeinheit 24 geschlossen sein, wobei das zumindest eine Textilnetzgewebe 21a, 21b und die Heizeinheit 24 die Durchlässigkeit für die Luftströmung 5 aufweisen.

Figur 2, 3 und 4 zeigen die Ausführung des Kindersitzes 1 anhand des Sitzteils 2. Alle Merkmale, welche bei den entsprechenden Figuren für das Sitzteil 2 beschrieben sind, können natürlich auch auf das Rückteil 3 übertragen werden. Beispielsweise können Sitzteil 2 und Rückenteil 3 in Bezug auf die in den entsprechenden Figuren gezeigte Heizeinheit 24, das zumindest eine Textilnetzgewebe 21 und/oder die Lüftungs- und/oder Strömungsöffnungen 7, 22 gleichartig aufgebaut sein.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Kindersitz
- 2: Sitzteil
- 3: Rückenteil
- 4: Lüfter
- 5: Luftströmung
- 6: Lüftungsbereich
- 6a: erster Lüftungsbereich
- 6b: zweiter Lüftungsbereich
- 7: Lüftungsöffnungen
- 8: Hohlkörper
- 8a: erster Hohlkörper
- 8b: zweiter Hohlkörper
- 9: Wandung
- 9a: erste Wandung
- 9b: zweite Wandung
- 10: erste Sitzfläche
- 11: zweite Sitzfläche
- 12: Leitungssystem
- 13: Gelenk
- 14: erster Temperatursensor
- 15: zweiter Temperatursensor
- 16: Steuereinheit
- 17: Schnittstelle
- 18: Reguliereinheit
- 19: mobiles Gerät
- 20: Alarmeinheit
- 21: Textilnetzgewebe
- 22: Strömungsöffnungen
- 23: Überzug
- 24: Heizeinheit
- 25: Einsatz

## Patentansprüche

1. Kindersitz (1) mit zumindest einem Sitzkörper (2, 3), der eine Sitzfläche (10, 11) für ein Kind aufweist, mit
einem Lüftungssystem zum Führen und/oder Ausbilden einer Luftströmung (5) zur Regulierung einer Temperatur des Kindes,
und mit in zumindest einem Lüftungsbereich (6) angeordneten Lüftungsöffnungen (7) zum Heranführen der Luftströmung (5) an das Kind und/oder Abführen der Luftströmung (5) vom Kind,
wobei der zumindest eine Sitzkörper (2, 3) aus einem geschlossenen Hohlkörper (8) ausgebildet ist und die Lüftungsöffnungen (7) in einer Wandung (9) des Hohlkörpers (8) angeordnet sind, **dadurch gekennzeichnet, dass** der Sitzkörper (2, 3) mit einem Überzug (23) überzogen ist, dass das Lüftungssystem eine Heizeinheit (24) aufweist und dass die Heizeinheit (24) zwischen dem Sitzkörper (2, 3) und dem Überzug (23) angeordnet ist.

2. Kindersitz nach dem vorherigen Anspruch, **dadurch gekennzeichnet, dass** der zumindest eine Sitzkörper (2, 3) ein Sitzteil (2) mit einer ersten Sitzfläche (10) und/oder ein Rückenteil (3) mit einer zweiten Sitzfläche (11) umfasst und/oder
dass der zumindest eine Lüftungsbereich (6) mit den Lüftungsöffnungen (7) im Sitzteil (2) und/oder im Rückenteil (3) angeordnet ist und/oder
dass der Lüftungsbereich (6) in der, insbesondere ersten und/oder zweiten, Sitzfläche (10, 11) angeordnet ist.

3. Kindersitz nach einem oder mehreren der vorherigen Ansprüche,
**dadurch gekennzeichnet, dass** das Lüftungssystem einen Lüfter (4) aufweist, der den geschlossenen Hohlkörper (8) mit einem Unterdruck beaufschlagen kann.

4. Kindersitz nach einem oder mehreren der vorherigen Ansprüche, **dadurch gekennzeichnet, dass** ein erster geschlossener Hohlkörper (8a) des Sitzteils (2) und ein zweiter geschlossener Hohlkörper (8b) des Rückenteils (3) mittels eines Leitungssystems (12) des Lüftungssystems miteinander verbunden sind.

5. Kindersitz nach einem oder mehreren der vorherigen Ansprüche, **dadurch gekennzeichnet, dass** der geschlossene Hohlkörper (8) des zumindest einen Sitzkörpers (2, 3), insbesondere das Sitzteil (2) und/oder das Rückenteil (3), mittels Extrusionsblasformens ausgebildet ist.

6. Kindersitz nach einem oder mehreren der vorherigen Ansprüche, **dadurch gekennzeichnet, dass** die Lüftungsöffnungen (7) durch Abschneiden von beim Extrusionsblasformen entstandenen Fortsätzen ausgebildet sind.

7. Kindersitz nach einem oder mehreren der vorherigen Ansprüche, **dadurch gekennzeichnet, dass** der Kindersitz (1) zumindest im Bereich der zumindest einen Sitzfläche (10, 11) und/oder der Lüftungsbereiche (6) mit einem luftdurchlässigen Textilnetzgewebe (21) überzogen ist.

8. Kindersitz nach einem oder mehreren der vorherigen Ansprüche, **dadurch gekennzeichnet, dass** das Textilnetzgewebe (21) Strömungsöffnungen (22) aufweist, die zu den Lüftungsöffnungen (7) des zumindest einen Sitzkörpers (2, 3) koaxial ausgerichtet sind.

9. Kindersitz nach einem oder mehreren der vorherigen Ansprüche, **dadurch gekennzeichnet, dass** das Textilnetzgewebe (21) mit einem Überzug (23) überzogen ist.

10. Kindersitz nach einem oder mehreren der vorherigen Ansprüche, **dadurch gekennzeichnet, dass** der Kindersitz (1) einen ersten Temperatursensor (14) aufweist, mittels dem die Temperatur des Kindes gemessen werden kann, und/oder einen zweiten Temperatursensor (15) aufweist, mittels dem eine Umgebungstemperatur des Kindersitzes (1) gemessen werden kann.

11. Kindersitz nach einem oder mehreren der vorherigen Ansprüche, **dadurch gekennzeichnet, dass** der Kindersitz (1) eine Steuereinheit (16) aufweist, die die gemessene Temperatur des ersten und/oder zweiten Temperatursensors (14, 15) auswerten kann und/oder das Lüftungssystem in Abhängigkeit der gemessenen Temperatur des ersten und/oder zweiten Temperatursensors (14, 15) steuern kann und/oder dass der Kindersitz (1) eine Alarmeinheit (20) aufweist, die mit der Steuereinheit (16) verbunden ist.

12. Kindersitz nach einem oder mehreren der vorherigen Ansprüche, **dadurch gekennzeichnet, dass** der Kindersitz (1) eine Schnittstelle (17), insbesondere Bluetooth, aufweist, über die zumindest die Messwerte des ersten und/oder zweiten Temperatursensors (14, 15) an ein mobiles Gerät (19) und/oder eine Fahrzeugsteuerung übermittelt werden können und/oder das Lüftungssystem vom mobilen Gerät (19) und/oder von der Fahrzeugsteuerung gesteuert werden kann, wobei vorzugsweise die Steuereinheit (16) die Schnittstelle (17) aufweist.

13. Kindersitz nach einem oder mehreren der vorherigen Ansprüche, **dadurch gekennzeichnet, dass** der Kindersitz (1) einen Erkennungssensor, insbesondere Druck-, Kontakt- und/oder Annäherungssensor, aufweist, mittels dem die Anwesenheit des Kindes im Kindersitz (1) erkannt werden kann.

14. Kindersitz nach einem oder mehreren der vorherigen Ansprüche, **dadurch gekennzeichnet, dass** das Lüftungssystem des Kindersitzes (1) mit einer Klimaanlage eines Fahrzeugs verbindbar ist.

15. Kindersitz nach einem oder mehreren der vorherigen Ansprüche, **dadurch gekennzeichnet, dass** die Heizeinheit (24) als Heizschicht ausgebildet ist und/oder
dass die Heizeinheit (24) auf dem zumindest einen Sitzkörper (2, 3) angeordnet ist.

## Claims

1. A child seat (1) having at least one seat body (2, 3) comprising a seat surface (10, 11) for a child, having
a ventilation system for guiding and/or implementing an air stream (5) for regulating a temperature of the child,
and having ventilation openings (7) disposed in at least one ventilation region (6) for guiding the air stream (5) toward the child and/or for guiding the air stream (5) away from the child,
the at least one seat body (2, 3) being implemented from a closed hollow body (8) and the ventilation openings (7) being disposed in a wall (9) of the hollow body (8), **characterized in that** the seat body (2, 3) is covered by an overlay (23), that the ventilation system comprises a heating unit (24), and that the heating unit (24) is disposed between the seat body (2, 3) and the overlay (23).

2. The child seat according to the preceding claim, **characterized in that** the at least one seat body (2, 3) comprises a seat part (2) having a first seat surface (10) and/or a back part (3) having a second seat surface (11), and/or
that the at least one ventilation region (6) having the ventilation openings (7) is disposed in the seat part (2) and/or in the back part (3), and/or
that the ventilation region (6) is disposed particularly in the first and/or second seat surface (10, 11).

3. The child seat according to any one or more of the preceding claims, **characterized in that** the ventilation system comprises a fan (4) for applying a negative pressure to the closed hollow body (8).

4. The child seat according to any one or more of the preceding claims, **characterized in that** a first closed, hollow body (8a) of the seat part (2) and a second closed, hollow body (8b) of the back part (3) are connected to each other by means of a ductwork system (12) of the ventilation system.

5. The child seat according to any one or more of the preceding claims, **characterized in that** the closed hollow body (8) of the at least one seat body (2, 3), particularly the seat part (2) and/or the back part (3), is implemented by means of extrusion blow molding.

6. The child seat according to any one or more of the preceding claims, **characterized in that** the ventilation openings (7) are implemented by cutting off protrusions arising during extrusion blow molding.

7. The child seat according to any one or more of the preceding claims, **characterized in that** the child seat (1) is covered by an air-permeable textile mesh fabric (21) at least in the region of the at least one seat surface (10, 11) and/or of the ventilation regions (6).

8. The child seat according to any one or more of the preceding claims, **characterized in that** the textile mesh fabric (21) comprises flow openings (22) coaxially aligned to the ventilation openings (7) of the at least one seat body (2, 3).

9. The child seat according to any one or more of the preceding claims, **characterized in that** the textile mesh fabric (21) is covered by an overlay (23).

10. The child seat according to any one or more of the preceding claims, **characterized in that** the child seat (1) comprises a first temperature sensor (14) by means of which the temperature of the child can be measured, and/or comprises a second temperature sensor (15) by means of which an ambient temperature of the child seat (1) can be measured.

11. The child seat according to any one or more of the preceding claims, **characterized in that** the child seat (1) comprises a control unit (16) for evaluating the measured temperature of the first and/or second temperature sensor (14, 15) and/or for controlling the ventilation system as a function of the measured temperature of the first and/or second temperature sensor (14, 15), and/or that the child seat (1) comprises an alarm unit (20) connected to the control unit (16).

12. The child seat according to any one or more of the preceding claims, **characterized in that** the child seat (1) comprises an interface (17), particularly Bluetooth, by means of which at least the measured values of the first and/or second temperature sensor (14, 15) can be transmitted to a mobile device (19) and/or to a vehicle controller, and/or the ventilation system can be controlled by the mobile device (19) and/or by the vehicle controller, wherein the control unit (16) preferably comprises the interface (17).

13. The child seat according to any one or more of the preceding claims, **characterized in that** the child seat (1) comprises a detecting sensor, particularly a pressure, contact, and/or proximity sensor, by means of which the presence of the child in the child seat (1) can be detected.

14. The child seat according to any one or more of the preceding claims, **characterized in that** the ventilation system of the child seat (1) can be connected to a climate control unit of a vehicle.

15. The child seat according to any one or more of the preceding claims, **characterized in that** the heating unit (24) is implemented as a heating layer, and/or
that the heating unit (24) is disposed on the at least one seat body (2, 3).

## Revendications

1. Siège pour enfant (1) avec au moins un corps de siège (2, 3) qui présente une surface de siège (10, 11) pour un enfant, avec un système de ventilation pour guider et/ou former un écoulement d'air (5) afin de réguler une température de l'enfant,
et avec des ouvertures de ventilation (7) disposées dans au moins une zone de ventilation (6) pour amener l'écoulement d'air (5) à l'enfant et/ou pour évacuer l'écoulement d'air (5) depuis l'enfant,
dans lequel le, au moins un, corps de siège (2, 3) est formé d'un corps creux fermé (8) et les ouvertures de ventilation (7) sont disposées dans une paroi (9) du corps creux (8), **caractérisé en ce que** le corps de siège (2, 3) est recouvert d'un revêtement (23), **en ce que** le système de ventilation présente une unité de chauffage (24) et **en ce que** l'unité de chauffage (24) est disposée entre le corps de siège (2, 3) et le revêtement (23).

2. Siège pour enfant selon la revendication précédente, **caractérisé en ce que** le, au moins un, corps de siège (2, 3) comprend une partie de siège (2) avec une première surface de siège (10) et/ou une partie de dossier (3) avec une deuxième surface de siège (11), et/ou
**en ce que** la, au moins une, zone de ventilation (6) avec les ouvertures de ventilation (7) est disposée dans la partie de siège (2) et/ou dans la partie de dossier (3) et/ou
**en ce que** la zone de ventilation (6) est disposée dans la, en particulier première et/ou deuxième, surface de siège (10, 11).

3. Siège pour enfant selon l'une quelconque ou plusieurs des revendications précédentes, **caractérisé en ce que** le système de ventilation comprend un ventilateur (4) qui peut appliquer une dépression au corps creux fermé (8).

4. Siège pour enfant selon l'une quelconque ou plusieurs des revendications précédentes, **caractérisé en ce qu'**un premier corps creux fermé (8a) de la partie de siège (2) et un deuxième corps creux fermé (8b) de la partie de dossier (3) sont reliés l'un à l'autre au moyen d'un système de conduites (12) du système de ventilation.

5. Siège pour enfant selon l'une quelconque ou plusieurs des revendications précédentes, **caractérisé en ce que** le corps creux fermé (8) de l'au moins un corps de siège (2, 3), en particulier la partie de siège (2) et/ou la partie de dossier (3), est formé par extrusion-soufflage.

6. Siège pour enfant selon l'une quelconque ou plusieurs des revendications précédentes, **caractérisé en ce que** les ouvertures de ventilation (7) sont formées par découpe de prolongements formés lors du moulage par extrusion-soufflage.

7. Siège pour enfant selon l'une quelconque ou plusieurs des revendications précédentes, **caractérisé en ce que** le siège pour enfant (1) est recouvert d'un tissu à mailles textile (21) perméable à l'air au moins dans la zone de l'au moins une surface de siège (10, 11) et/ou des zones de ventilation (6).

8. Siège pour enfant selon l'une quelconque ou plusieurs des revendications précédentes, **caractérisé en ce que** le tissu à mailles textile (21) présente des ouvertures d'écoulement (22) qui sont orientées coaxialement par rapport aux ouvertures de ventilation (7) de l'au moins un corps de siège (2, 3).

9. Siège pour enfant selon l'une quelconque ou plusieurs des revendications précédentes, **caractérisé en ce que** le tissu à mailles textile (21) est recouverte d'un revêtement (23).

10. Siège pour enfant selon l'une quelconque ou plusieurs des revendications précédentes, **caractérisé en ce que** le siège pour enfant (1) comprend un premier capteur de température (14) au moyen duquel la température de l'enfant peut être mesurée, et/ou un deuxième capteur de température (15) au moyen duquel une température ambiante du siège pour enfant (1) peut être mesurée.

11. Siège pour enfant selon l'une quelconque ou plusieurs des revendications précédentes, **caractérisé en ce que** le siège pour enfant (1) présente une unité de commande (16) qui peut évaluer la température mesurée du premier et/ou du deuxième capteur de température (14, 15) et/ou qui peut commander le système de ventilation en fonction de la température mesurée du premier et/ou du deuxième capteur de température (14, 15) et/ou **en ce que** le siège pour enfant (1) présente une unité d'alarme (20) qui est reliée à l'unité de commande (16).

12. Siège pour enfant selon l'une quelconque ou plusieurs des revendications précédentes, **caractérisé en ce que** le siège pour enfant (1) présente une interface (17), en particulier Bluetooth, par laquelle au moins les valeurs de mesure du premier et/ou du deuxième capteur de température (14, 15) peuvent être transmises à un appareil mobile (19) et/ou une commande du véhicule et/ou le système de ventilation peut être commandé par l'appareil mobile (19) et/ou la commande du véhicule, dans lequel, de préférence, l'unité de commande (16) présente l'interface (17).

13. Siège pour enfant selon l'une quelconque ou plusieurs des revendications précédentes, **caractérisé en ce que** le siège pour enfant (1) comporte un capteur de détection, en particulier un capteur de pression, de contact et/ou de proximité, au moyen duquel la présence de l'enfant sur le siège pour enfant (1) peut être détectée.

14. Siège pour enfant selon l'une quelconque ou plusieurs des revendications précédentes, **caractérisé en ce que** le système de ventilation du siège pour enfant (1) peut être connecté à un système de climatisation d'un véhicule.

15. Siège pour enfant selon l'une quelconque ou plusieurs des revendications précédentes, **caractérisé en ce que** l'unité de chauffage (24) se présente sous la forme d'une couche chauffante et/ou.
**en ce que** l'unité de chauffage (24) est disposée sur le, au moins un, corps de siège (2, 3).
